# EUROPEAN PATENT APPLICATION

(11) **EP 2 100 935 A1**
(43) Date of publication of application: **16.09.2009**
(21) Application number: 09003240.0
(22) Date of filing: 06.03.2009
(51) Int. Cl.: C09J 7/02, G09F 3/02, G09F 3/03, G09F 3/10

(54) **Tamperproof adhesive tape**

(30) Priority: 13.03.2008 TW 97204291 U
(71) Applicant: Seal King Industrial Co. Ltd, T'ao yuan (TW)
(72) Inventor: Wang, Chung-Chin, Yangmei Township Taoyuan (TW)
(74) Representative: Musil, Dobroslav

(57) **Abstract**

Disclosed is a tamperproof adhesive tape comprised of a substrate, one or more identification layers formed on a surface of the substrate, and an adhesive layer formed on the identification layer away from the substrate surface. The tamperproof adhesive tape of the present invention is characterized by disposing a plurality of tearing gaps on two sides of the substrate, the identification layer and the adhesion layer, such that users can easily tear away predefined portions of the adhesive tape along the tearing lines provided therein, and also the adhesive tape is partially disconnected after being removed from a sealed package or the like, thereby indicating the sealing integrity of the sealed package and contents therein.

## Description

### BACKGROUND OF THE INVENTION

### Field of the Invention

The present invention relates to a tamperproof adhesive tape, and, more particularly, to a tamperproof adhesive tape for a package or the like enabling a predefined portion thereof to be easily removable while maintaining a high degree of security against tampering with the contents provided in a package.

### Description of Prior Art

In response to the demand for greater packaging security, a variety of tamperproof related products have been introduced, such as tamperproof papers, labels, films and adhesive tapes. Such products are used for the closure and protection of packages containing official documents or valuable articles to help guard against theft, tampering or counterfeiting.

Conventional tamperproof adhesive tapes consist of a coating layer having a tamperproof sign coated on the backside of the substrate thereof, and further a thin adhesive coated over the coating layer to thereby seal an article with the tamperproof adhesive tape. Since the coating layer having the tamperproof sign is made of a material different from other coating materials, and the adhesion between the coating layer and the adhesive layer is stronger than that between the coating layer and the substrate, the tamperproof mark on the coating layer remains on the sealed object after the tamperproof adhesive tape is torn away and removed from the package, thereby indicating the integrity of the sealed state thereof. Although such tamperproof tapes can effectively detect the sealing integrity of a package and its contents, the opened package loses its integrity and often is not resealable in terms of holding the contents within a package (even though the tamper-detection feature has been exhausted).

To assist with the issue of the security tape losing its ability to seal, the inventor of this application formerly proposed a tamperproof adhesive tape disclosed in patent Publication No. 433279, wherein the backside of the substrate of the tamperproof adhesive tape has a letter-printed layer and a color-coated layer coated over the letter-printed layer and other areas of the substrate free of the letter-printed layer. Both the letter-printed layer and the color-coated layer function as indicating layers having indicator signs and tear marks formed thereon, and the color-coated layer has a mucous membrane layer and an adhesive layer sequentially formed thereon functioning as an adhesion layer, thereby enabling the tamperproof adhesive tape to be affixed to a package to be sealed.

The adhesion between the letter-printed layer and the color-coated layer is weaker than that between the mucous membrane layer and the color-coated layer, and also the adhesion between the letter-printed layer and the color-coated layer is weaker than that between the substrate and the letter-printed layer, whereas the adhesion between the substrate and the color-coated layer is stronger than that between the mucous membrane layer and the color-coated layer. With different degrees of adhesion between the layers of the tape, the tamperproof adhesive tape clearly indicates the sealed status of a package or the like even if the substrate of the tape has been removed therefrom since the mucous membrane layer remains adhered to the sealed object, and, moreover, the package is resealable to seal in and keep contents therein intactly maintained after the tamper-detection ability has been exhausted.

However, such tamperproof adhesive layers are typically formed with smooth edges on the sides thereof, and also the substrate thereof is often a plastic-made thin film, necessitating the use of a cutting tool and thus inconveniencing users in usage when a strip of adhesive tape is to be separated from a roll of adhesive tape.

Regarding this issue, Taiwanese Patent Publication M315723 has disclosed a hand-tearable transparent adhesive tapes that can be torn easily by hand (without using a tool). However, this hand-tearable transparent tape is not formed with tamperproof characteristics for indicating the integrity of a sealed object without adding a tamperproof tape for security purposes.

As such, the present invention sets out to provide an improved security tamperproof adhesive tape having predefined portions easily removable while maintaining a higher degree of security against tampering with the contents of a package or the like.

### SUMMARY OF THE INVENTION

In light of the drawbacks associated with the conventional techniques as described above, a primary objective of the present invention is to provide a tamperproof adhesive tape that can be partially removed for identification purposes.

Another objective of the present invention is to provide a tamperproof adhesive tape that provides a package or the like sealed thereby with a higher degree of security against theft, substitution of counterfeit articles or the introduction of foreign articles or substances to better maintain the integrity of the sealed contents.

In accordance with the foregoing and other objectives, the invention provides a tamperproof adhesive tape for indicating the sealed status and indicating the integrity of contents of a package or the like, the tamperproof adhesive tape comprising: a substrate, at least an identification layers formed on a surface of the substrate, an adhesion layer formed on the at least an identification layer away from the substrate surface, and a plurality of tearing gaps correspondingly formed on two sides of the substrate, the identification layer and the adhesion layer, thereby allowing predefined portions of the tamperproof adhesive tape to be torn away after being removed for indicating the sealed state and integrity of contents of a package or the like.

In this embodiment, the plurality of tearing gaps may comprise any one of V-shaped, S-shaped, U-shaped, Y-shaped, I-shaped and semi-circular-shaped gaps. In addition to having the tearing gaps recessively disposed on the two sides of the substrate, the identification layer and the adhesion layer, the tearing gaps may also be such disposed to be partially disconnected at both sides of the substrate, the identification layer and the adhesion layer.

Compared to the prior art, the tamperproof adhesive tape of the present invention can be applied to different structures of tamperproof adhesive tapes for user-friendly convenience in use. Further, when the tamperproof adhesive tape is torn away and removed, concentration of the pulling pressure will be imposed upon the tearing gaps to partially break off the tamperproof adhesive tape serving as tearing evidence, thereby providing a higher degree of security against tampering with the contents of a package or the like.

### BRIEF DESCRIPTION OF THE DRAWINGS

FIG. 1a is a perspective view illustrating a roll of the tamperproof adhesive tape according to a first embodiment of the present invention;
FIG. 1b is a cross-sectional view illustrating cutting of the tamperproof adhesive tape along the AA line depicted in FIG. 1a;
FIG. 1c is a side cross-sectional view illustrating cutting of the tamperproof adhesive tape perpendicularly along the AA line depicted in FIG. 1a;
FIG. 2a is a side cross-sectional view illustrating tearing and removing the tamperproof adhesive tape away from the substrate affixed to a package or the like;
FIG. 2b is a top view illustrating cracks in the tamperproof adhesive tape after being torn away from the substrate according to the present invention;
FIG. 3 is a side cross-sectional view illustrating the tamperproof adhesive tape according to a second embodiment of the present invention;
FIG. 4 is a side cross-sectional view illustrating the once-removed tamperproof adhesive tape from the substrate after being adhered to a sealed object;
FIG. 5 is a top view illustrating cracks in the tamperproof adhesive tape after being torn away from the substrate;
FIG. 6 is a side cross-sectional view illustrating the tamperproof adhesive tape according to a third embodiment of the present invention;
FIG. 7 is a side cross-sectional view illustrating the once-removed tamperproof adhesive tape from the substrate after being adhered to a sealed object depicted in FIG 6; and
FIG. 8a and FIG. 8b are top views illustrating two forms of tear marks respectively with one tearing from a reversed direction after removing the tamperproof adhesive tape from the substrate.

### DETAILED DESCRIPTION OF THE PRESENT EMBODIMENTS

The present invention is described in the following so that one skilled in the pertinent art can readily understand other advantages and effects of the present invention. The present invention may also be implemented and applied according to other embodiments, and the details may be modified based on differing views and applications without departing from the essential spirit of the present invention.

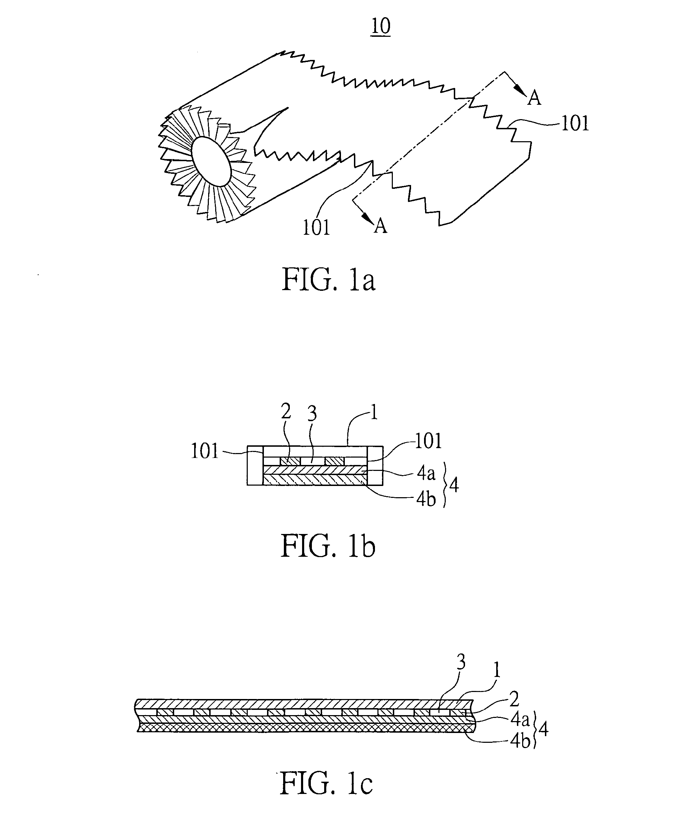

FIG. 1a through FIG. 2b are views illustrating the first embodiment of the tamperproof adhesive tape according to the present invention. As depicted in FIG. 1a to FIG. 1c, the tamperproof adhesive tape 10 in this embodiment comprises a substrate 1 on top in the figure that faces outwards in application and serves to support other layers; one or more first identification layers 2 formed partially on the lower surface of the substrate 1; one or more second identification layers 3 formed partially and alternately on the same surface of the substrate 1 as the first identification layer 2; an adhesion layer 4 formed on the identification layers 2,3 at a position away from and opposite to the substrate surface; and a plurality of tearing gaps 101 formed on/along two sides of the substrate 1, the identification layers 2,3 and the adhesion layer 4, thereby allowing predefined portions of the tamperproof adhesive tape to be torn away after being removed, thereby identifying the sealed state and integrity of the contents of a package or the like.

The substrate 1 may include, but is not limited to, transparent or semitransparent plastic film substrates, such that the one or more identification layers formed on the backside thereof can be easily observed after being removed. The first identification layer 2 is a resin material having the same color and transparency as the substrate 1 and is adherable to the substrate 1, wherein tear marks are formed on the backside of the substrate 1 by printing. The second identification layer 3 may comprise, but is not limited to, an ink having a color different or in contrast to that of the first identification layer 2, such that the sealed state can be clearly observed after the substrate 1 is removed from the tamperproof adhesive tape 10. The adhesion layer 4 may include a mucous membrane layer 4a and an adhesive layer 4b, wherein the mucous membrane layer 4a is composed of a viscous membrane whereby the color adhered to and formed on the first identification layer 2 can be adhered and transformed to the sealed object after the substrate 1 is removed from the tamperproof adhesive tape 10. The adhesive layer 4b may be, for example, an adhesive material coated over the mucous membrane layer 4a enabling the tamperproof adhesive tape to be adhered to a package or the like for security reasons.

The plurality of tearing gaps 101 are symmetrically formed along two sides of the substrate 1, the identification layers 2,3 and the adhesion layer 4, such that the tearing gaps can be hand-torn with the concentration of pulling pressure imposed thereupon by a tearing motion to remove only predefined portions of the tamperproof adhesive tape 1, thereby enabling removal of a strip of the desired length of the tamperproof adhesive tape 1.

In this embodiment, the plurality of tearing gaps 101 are recessively formed on two sides of the substrate 1, the identification layers 2,3 and the adhesion layer 4, thereby forming indented edges therein, which include, but are not limited to, V-shaped gaps. In practice, the plurality of tearing gaps 101 may comprise any one of V-shaped, S-shaped, U-shaped, Y-shaped gaps, I-shaped gaps and semi-circular-shaped gaps, or other equivalents enabling concentration of pulling pressure to be imposed thereupon for partially tearing away the tape. In addition to having the tearing gaps recessively formed along both sides of the substrate 1, the identification layers 2,3 and the adhesion layer 4, the tearing gaps 101 may also be formed to partially disconnect at both sides of the substrate 1, the identification layers 2, 3 and the adhesion layer 4. That is, the tearing gaps 101 may also be formed to have two sides of the substrate 1, the identification layers 2, 3 and the adhesion layer 4 partially cut off. Since the structure and formation characteristics of the tearing gaps are well-known in the art and are not crucial features of the present invention, further illustration and description thereof is omitted for brevity.

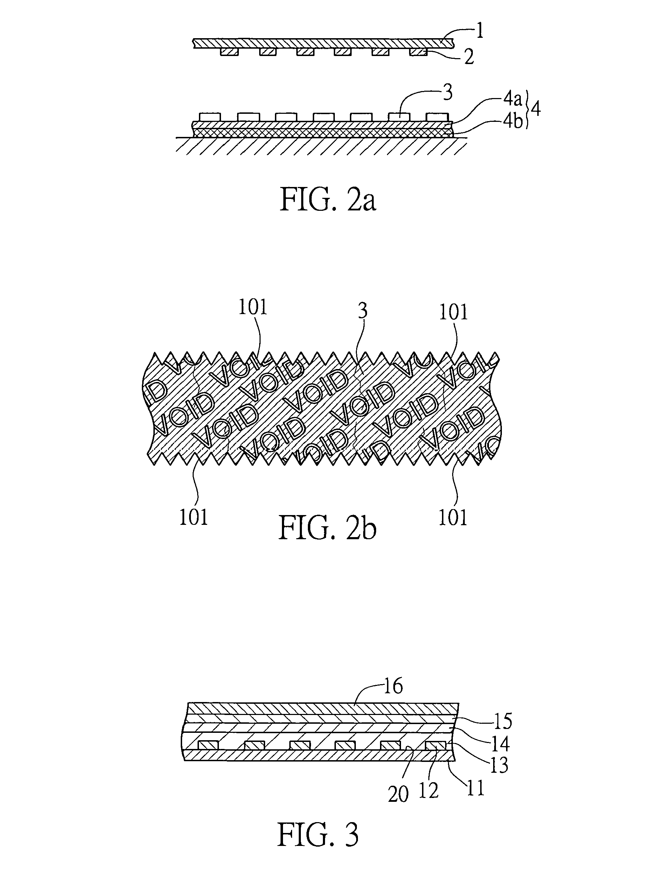

Referring to FIG. 2a, in that the adhesion between the second identification layer 3 and the mucous membrane 4a is weaker than that between the mucous membrane layer 4a and the adhesive layer 4b, and also is weaker than that between the adhesive layer 4b and the sealed object, and also because the adhesion between the substrate 1 and the first identification layer 2 is stronger than that between first and second identification layers 2, 3, and the adhesion between identification layers 2, 3 is weaker than that between the adhesion layer 4 and the second identification layer 3, the first identification layer 2 and portions of the second identification layer 3 formed in the gaps of the first identification layer 2 will be torn away together with the substrate 1 from the tamperproof adhesive tape 10 after being removed, while the second identification layer 3 formed over the first identification layer 2 will be separated from the first identification layer 2 and remain on the mucous membrane layer 4a of the adhesion layer 4, as a result of the different degrees of adhesion force existing between layers thereof.

As depicted in FIG. 2b, the mucous membrane layer 4a remains affixed to the sealed object by means of the adhesive layer 4b and only the second identification layer 3 is revealed. Therefore, tear marks (such as "VOID") shown thereon clearly indicate that the tamperproof adhesive tape has been removed when viewing downwardly from top to bottom. Also, the tearing of the tamperproof adhesive tape 10 breaks off part of the tape due to the tearing gaps provided therein, such that the sealed state and integrity of the package sealed with such tape can be detected and identified, thereby providing a higher degree of security against tampering.

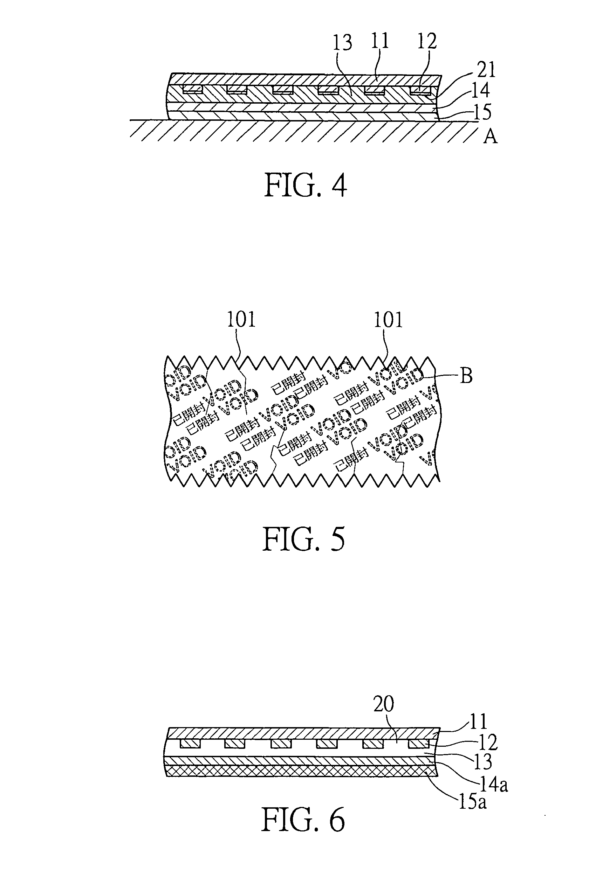

FIG. 3 through FIG. 5 provide two cross-sectional views and a top view, respectively, illustrating the tamperproof adhesive tape according to the second embodiment of the present invention. As depicted in FIG. 3, the tamperproof adhesive tape of this embodiment is composed of a substrate 11 made of a transparent or semitransparent plastic thin film, a letter-printed layer 12 formed on the backside of the substrate 11 as a first identification layer, a plurality of gaps 20 formed in the letter-printed layer 12, a color-coated layer 13 coated over the letter-printed layer 12 and in the gaps 20 as a second identification layer, a non-detachable layer 14 coated over the color-coated layer 13, an adhesion layer 15 coated over the non-detachable layer 14, an adhesive-proof paper 16 affixed to the adhesion layer 15, and a plurality of the tearing gaps 101 as shown in FIG. 5 oppositely disposed along two sides of the substrate 11, the letter-printed layer 12, the color-coated layer 13, the non-detachable layer 14, the adhesion layer 15, and the adhesive-proof paper 16.

In this embodiment, the substrate 11 may include, but is not limited to, transparent or semitransparent plastic film substrates allowing the tear marks to be observed from the backside of the letter-printed layer 12 after removing the substrate 11. The letter-printed layer 12 may be a resin material having the same color and degree of transparency as that of the substrate 11 and also can be adhered to the substrate 11, wherein the letter-printed layer 12 is applied to the backside of the substrate 11 by printing. In this embodiment, the letter-printed layer 12 may include but is not limited to, for example, a lettering mark such as "OPENED" or "VOID" as shown in FIG. 5, or any patterns and markings indicating the sealed state. The color-coated layer 13 may comprise, but is not limited to, an ink having a different color from that of the substrate 11 and the letter-printed layer 12 for easy and clear identification. For example, the color-coated layer 13 may have a color contrasting to that of the substrate 11 and the letter-printed layer 12 such that it is easily identified. On the other hand, the selected color may also be less contrasting and distinguishable if the sealed state and tamperproof function are not intended to be easily detectable.

Further, the adhesion between the color-coated layer 13 and the letter-printed letter 12 is weaker than that between the color-coated layer 13 and the backside of the substrate 11. Except for the lettering, patterns and markings printed on the backside of the letter-printed layer 12, both the backside area of the substrate 11 that is clear of the letter-printed layer 12 and the gaps 20 formed in between the letter-printed layer 12 have the color-coated layer 13 applied thereon when the letter-printed layer 12 is applied. Therefore, after the tamperproof adhesive tape is torn away, the color-coated layer 13 is separated from the letter-printed layer 12 but still adhered to the back of the substrate 11 and functions as a contrast base color, thereby indicating that the letter-printed layer 12 detached from the color-coated layer 13 by the surface of the substrate 11.

The non-detachable layer 14 is applied between the color-coated layer 13 and the adhesion layer 15 as a medium layer enabling adhesive to be applied to the oil ink of the color-coated layer 13 to form the adhesion layer 15 with strong bonding therebetween whereby the tamperproof adhesive tape is adhered to the sealed object. Preferably, the adhesion layer is a material that does not adhere to or have residue left on the sealed object after being torn away and that also can be reapplied to the object to be sealed.

The adhesive-proof paper 16 may include, but is not limited to, a conventional marking paper that is to be torn away before the tamperproof adhesive tape is adhered to a package or the like to be sealed. After removing the tamperproof adhesive tape from the sealed object as shown in FIG. 4 and FIG. 5, the adhesion force of the adhesion layer 15 will be imposed upon the color-coated layer 13 via the non-detachable layer 14, such that the color-coated layer 13 detaches from both the letter-printed layer 12 and the substrate 11. However, since the adhesion between the color-coated layer 13 and the substrate 11 is stronger than that between the color-coated layer 13 and the letter-printed layer 12, a gap 21 is formed between the color-coated layer 13 and the letter-printed layer 12 after being pulled off while the color-coated layer 13 and the substrate 11 remain attached to one another As such, when observing from the surface of the substrate 11, as shown in FIG. 5, the tear mark *B* of the letter-printed layer 12 is revealed from the gap 21, wherein the color revealed therefrom is the color of the substrate 11.

Therefore, even if the detached tape is reapplied and affixed back to the previously-sealed object A, as indicated in FIG. 4, the gap 21 formed therebetween indicating the tear mark *B* will still be visible from the surface of the substrate 11 and the sealed state cannot be restored as new, and further the tamperproof adhesive tape is partially broken by the tearing gaps 101 provided thereon.

The major difference differentiating between the first and second embodiments is that, the plurality of tearing gaps 101 in the second embodiment are correspondingly disposed on two sides of the tamperproof adhesive tape comprising the substrate 11, the letter-printed layer 12 , the color-coated layer 13, the non-detachable layer 14, the adhesion layer 15 and the adhesive-proof paper 16. In other words, the tearing gaps 101 may be selectively disposed on a variety of tamperproof adhesive tapes of different structures for security purposes.

FIG. 6 through FIG. 8b provide two cross-sectional views and two top views illustrating the tamperproof adhesive tape of the third embodiment according to the present invention, wherein like elements of the second and third embodiments utilize the same figure reference numbers, with descriptions for like elements of the third embodiment being omitted herein for brevity.

As depicted in FIG. 6, the tamperproof adhesive tape of this embodiment is composed of a substrate 11 made of a transparent or semitransparent plastic thin film, a letter-printed layer 12 formed on the backside of the substrate 11 functioning as a first identification layer, a plurality of gaps 20 formed in the letter-printed layer 12, a color-coated layer 13 coated over the letter-printed layer 12 and in the gaps 20 functioning as a second identification layer, a non-detachable layer 14 coated over the color-coated layer 13, an adhesion layer comprised of a mucous membrane layer 14a and an adhesive layer 15a; and a plurality of tearing gaps 101 oppositely disposed along two sides of the substrate 11, the letter-printed layer 12, the color-coated layer 13 and the adhesion layer 14a, 15a.

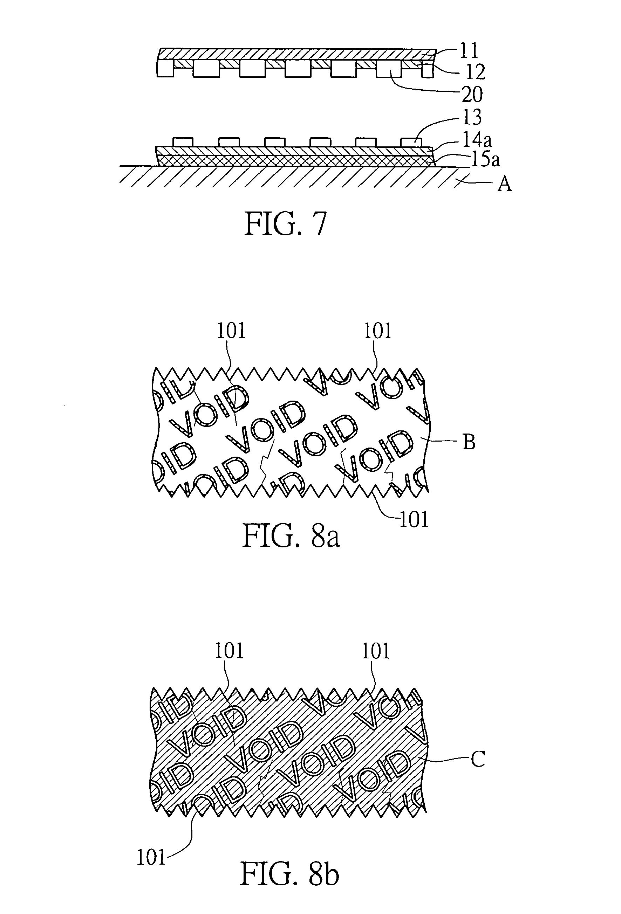

Note that in the prior-described second embodiment, the adhesion between the adhesive layer 15a and the color-coated layer 13 is stronger than that between the color-coated layer 13 and the letter-printed layer 12, but is weaker than that between the color-coated layer 13 and the substrate 11. There is no non-detachable layer 14 in this embodiment as provided in the second embodiment. Also, the adhesion between the letter-printed layer 12 and the color-coated layer 13 is weaker than that between the mucous membrane layer 14a and the color-coated layer 13, and is also weaker than that between the substrate 11 and the letter-printed layer 12, and the adhesion between the substrate 11 and the color-coated layer 13 is stronger than that between the macous membrane layer 14a and the color-coated layer 13. As a result of different degrees of adhesive force existing between layers of the tamperproof adhesive tape, as shown in FIG. 7, when being removed, the adhesive force of the adhesive layer 15a will impose upon the color-coated layer 13 by way of the mucous membrane layer 14a such that the color-coated layer 13 detaches from the substrate 11. The adhesion between the substrate 11 and the letter-printed layer 12 is stronger than the letter-printed layer 12 and the color-coated layer 13 partially applied on the letter-printed layer 12, and also the adhesion between the letter-printed layer 12 and the partial color-coated layer 13 applied thereon is weaker than that between the macous membrane layer 14a and the partial color-coated layer 13 applied thereon. As such, the partial color-coated layer 13 applied on the letter-printed layer 12 and the gaps 20 (that is, the predefined portions of the color-coated layer 13 to be removed from the mucous membrane layer 14a) will detach from the tamperproof adhesive tape together with the substrate 11 after being removed, and the color-coated layer 13 applied on the letter-printed layer 12 will detach from the letter-printed layer 12 and remain on the mucous membrane layer 14a and still be adhered to the sealed object *A* by way of the adhesive layer 15a.

As shown in FIG. 8a, since only part of the color-coated layer 13 remained on the letter-printed layer 12, the color-coated layer 13 applied above the mucous membrane layer 14a to be affixed to the sealed object A reveals tear marks *B* of the letterings, patterns or markings, thereby indicating the removal of the tamperproof adhesive tape when viewed from top of the mucous membrane layer 14a.

As shown in FIG. 8b, the partial color-coated layer 13 in the gap 20 of the letter-printed layer 12 that is to be removed together with the substrate 11 is displayed on the substrate 11 tear mark *C* after being torn away as a reversed tear mark from that exhibited in FIG. 8a. Also, since the plurality of tearing taps 101 formed on the tape concentrate the pulling pressure applied thereon, the tamperproof adhesive tape is partially broken after being removed, as indicated in FIG. 8a and FIG. 8b, respectively.

Compared to the prior art, the tamperproof adhesive tape of the present invention is characterized by employing a plurality of tearing gaps formed along two sides of each of the tape layers, so that the tape can be torn off by hand at a predefined length without requiring use of a cutting tool Further, when the tamperproof adhesive tape is removed from a sealed object, the concentration of stress will be imposed upon the tearing gaps to partially break open the tamperproof adhesive tape, thereby providing a higher degree of security against tampering with the contents provided in a package or the like.

Accordingly, the tamperproof adhesive tape of the present invention can solve the problems associated with conventional techniques to ensure tamperproof security of property, and also the tamperproof adhesive tape allows for identification of tampering and facilitates easy utilization thereof. WHILE ILLUSTRATIVE EMBODIMENTS ARE PROVIDED IN THE ABOVE DESCRIPTION, SUCH ARE FOR ILLUSTRATION OF THE PRINCIPLES AND FUNCTIONS OF THE PRESENT INVENTION ONLY AND ARE NOT TO BE CONSTRUED RESTRICTIVELY. MODIFICATIONS AND VARIATIONS OF THE PRESENT INVENTION OBVIOUS TO THOSE SKILLED IN THE ART ARE TO BE COVERED BY THE FOLLOWING CLAIMS.

## Claims

1. A tamperproof adhesive tape, comprising:
a substrate,
at least an identification layer formed on a surface of the substrate,
an adhesion layer formed on the at least an identification layer away from the substrate surface, and
a plurality of tearing gaps correspondingly formed on two sides of the substrate, the identification layer and the adhesion layer, thereby allowing predefined portions of the tamperproof adhesive tape to be torn away after being removed, thereby identifying the sealed state and integrity of contents provided in a package or the like.

2. The tamperproof adhesive tape of claim 1, wherein the tamperproof adhesive tape comprises a first identification layer formed partially on a surface of the substrate, and a second identification layer formed partially and alternately on the same surface of the substrate as the first identification layer.

3. The tamperproof adhesive tape of claim 1, wherein the adhesion layer is affixed to an opposite surface of the substrate to which the first and second identification layers are affixed, and includes a mucous membrane layer and an adhesive layer.

4. The tamperproof adhesive tape of claim 3, wherein the adhesion between the second identification layer and the mucous membrane is weaker than that between the mucous membrane layer and the adhesion layer, and also is weaker than that between the adhesion layer and the sealed package; and also the adhesion between the substrate and the first identification layer is stronger than that between first and second identification layers, and wherein the adhesion between the identification layers is weaker than that between the adhesion layer and the second identification layer.

5. The tamperproof adhesive tape of claim 1, wherein the tamperproof adhesive tape comprises a letter-printed layer formed on the backside of the substrate as a first identification layer, a plurality of gaps formed on the letter-printed layer, a color-coated layer coated over the letter-printed layer and in the gaps as a second identification layer, and a non-detachable layer applied between the color-coated layer and the adhesion layer.

6. The tamperproof adhesive tape of claim 5, wherein the adhesion between the adhesion layer and the color-coated layer is stronger than that between the color-coated layer and the letter-printed layer, but is weaker than that between the color-coated layer and the substrate.

7. The tamperproof adhesive tape of claim 1, wherein the tamperproof adhesive tape comprises a letter-printed layer formed on the backside of the substrate as a first identification layer, a plurality of gaps formed on the letter-printed layer, a color-coated layer coated over the letter-printed layer and in the gaps as a second identification layer, and an adhesion layer having a mucous membrane layer and an adhesive layer.

8. The tamperproof adhesive tape of claim 7, wherein the adhesion between the letter-coated layer and the color-coated layer is weaker than that between the mucous membrane layer and the color-coated layer, and is also weaker than that between the substrate and the letter-coated layer, and wherein the adhesion between the substrate and the color-coated layer is stronger than that between the mucous membrane layer and the color-coated layer.

9. The tamperproof adhesive tape of claim 1, wherein the plurality of tearing gaps may be in the form selected from the group consisting of V-shaped gaps, S-shaped gaps, U-shaped gaps, Y-shaped gaps, I-shaped gaps and semi-circular-shaped gaps.

10. The tamperproof adhesive tape of claim 1, wherein the tearing gaps are adapted to partially disconnect two sides of the substrate, the identification layers and the adhesion layer.
